(19) Europäisches Patentamt
European Patent Office
Office européen des brevets

(11) **EP 4 385 967 A1**

(12) **EUROPEAN PATENT APPLICATION**

(43) Date of publication:
**19.06.2024 Bulletin 2024/25**

(21) Application number: **22213568.3**

(22) Date of filing: **14.12.2022**

(51) International Patent Classification (IPC):
**C04B 35/626** (2006.01)     **C04B 35/622** (2006.01)
**C04B 35/111** (2006.01)     **C04B 35/16** (2006.01)
**C04B 35/486** (2006.01)     **C04B 35/505** (2006.01)
**C23C 4/11** (2016.01)       **C23C 4/134** (2016.01)
**C01G 25/00** (2006.01)      **C04B 41/00** (2006.01)
**C04B 41/45** (2006.01)      **C04B 41/87** (2006.01)

(52) Cooperative Patent Classification (CPC):
(C-Sets available)
**C04B 35/62222; C01G 25/00; C04B 35/111;
C04B 35/16; C04B 35/486; C04B 35/505;
C04B 35/62655; C04B 41/009; C04B 41/4527;
C04B 41/87; C23C 4/11; C23C 4/134;**
C04B 2235/3224; C04B 2235/3225;
C04B 2235/5427;                          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Treibacher Industrie AG
9330 Treibach-Althofen (AT)**

(72) Inventors:
• **Curry, Nicholas
5662 Bruck an der Großglocknerstraße (AT)**

• **Susnjar, Johann
9374 Wieting (AT)**
• **Trache, Richard
9020 Klagenfurt (AT)**
• **Leitner, Matthias
9330 Althofen (AT)**
• **Körner, Karl
9321 Kappel am Krappfeld (AT)**

(74) Representative: **Schwarz & Partner Patentanwälte
GmbH
Patentanwälte
Wipplingerstraße 30
1010 Wien (AT)**

(54) **SPRAY POWDER FOR HIGH POROSITY COATINGS**

(57)     The present invention relates to a powder comprising solid ceramic particles, characterized that said particles have an inner porosity of at least 30 %, preferably of at least 45 % and preferably at most 65%, wherein said powder has a particle size with a $d_{10}$ of at least 100 $\mu$m.

EP 4 385 967 A1

**(Cont. next page)**

Fig. 1a

Fig. 1d

Fig. 1b

Fig. 1e

Fig. 1c

Fig. 1f

Fig. 1g

(52) Cooperative Patent Classification (CPC): (Cont.)
    C04B 2235/5436; C04B 2235/549;
    C04B 2235/6567; C04B 2235/77

    C-Sets
    **C04B 41/009, C04B 35/00;**
    **C04B 41/009, C04B 35/80;**
    **C04B 41/4527, C04B 41/4547, C04B 41/5042**

**Description**

The invention relates to a powder for thermal spraying.

**Background of the invention**

Atmospheric plasma spraying (APS) of powders is a well-known and established method for producing coatings.
Powders as feedstock material in thermal spraying allow to produce coatings for different applications. The so produced coatings are dense or porous depending on the application. The porosity of this coatings is in the range of below 5 vol% for dense coatings up to 30 vol% for high porosity coatings. For this state of the art coatings, spray powders with particle sizes in the range of 5 to 200 $\mu$m are used.
Special applications like ceramic abradable coatings in turbines for aviation or industrial gas turbines need coatings with porosities above 30 vol%.
Abradable coatings are made from a material that cuts away easily when it rubs against a stronger component. The former will be worn whereas the latter will face no crucial damage. Abradable coatings are used in the compressor and turbine section of jet engines and stationary gas turbines where they provide a technology for minimal clearance between the casing and rotating parts like turbine blades. This tighter sealing improves the overall efficiency. Abradable coatings not only allow for closer sealing, but provide the ability to adjust clearance in-situ to tolerate physical events and thermal mismatch scenarios during operation.
To produce ceramic coatings with porosities above 30 vol% it is state of the art to use mixtures of spray powder with a pore former material that are both simultaneously deposited by a thermal spray process. This pore former material is a volatile material that - after decomposition - leaves coarse pores in the applied coating. Pore formers could be for example polymers, graphite, nitride and other volatile materials. The use of such mixtures needs an additional step of burning-off to make sure all pore former material has been vanished and the final coating is ready to use as abradable coating.
The disadvantage of the powders of the state of the art and known methods to produce high porous coatings is the additional step to burn off the pore former and the relatively low deposition efficiency (DE) of below 30% due to the compromises in spray parameters when simultaneously depositing feedstock materials of very high (ceramic) and very low (pore formers) melting points. The low DE makes it necessary to use much more spray powder for comparable coating thickness as for standard porosity coatings. This is a waste of raw material and makes it necessary to develop recycling methods for the lost powder with additional equipment and energy effort.
The general principal of APS coatings for abradable applications is disclosed in US 5,434,210A for example.
A lot of efforts were made in the past to produce high porosity coatings without the addition of pore formers.
For example, US 8,486,520 B2 describes the production of high porosity coatings, made by spray particles in the particle size range of 53 to 160 $\mu$m with a high inner porosity made by agglomerated ceramic nano particles. Although the coatings have areas of 10 to 80 % of nanostructured porous microzones, the porosity that was achieved was in the range of 15 to 20 vol% which is much lower than the optimal range of 30 vol% and higher required for abradable coatings.
A further example is disclosed in EP 2 444 514 A1. This patent describes the production of a low density porous metal coating for use as a seal material on components of gas turbine engines. The coating is formed by depositing a low density porous abradable metal seal layer on the component. The seal layer is formed by co-depositing metallic sponge particles and metal precursor particles that decompose during post-deposition heat treatment to leave fine pores with metal walls. In this case a metal precursor that needs to be post heat treated is used to create a porous coating. Although this coating shows a porosity of 40 to 80 vol%, the principle is similar to the standard pore former method and also needs a post heat treatment to obtain the required porosity.
Yet one further example is disclosed in EP 2 514 850 B1. This patent describes the production of a thermal barrier coating. The coating is formed by thermal spraying of thermal spray particles that have a particle size distribution in which a 10 % cumulative particle size is not less than 30 $\mu$m and not more than 100 $\mu$m. The porosity of the coating is 16 vol%. This is much lower than the optimal range of 30 vol% and higher as required for abradable coatings.
WO 2022/197827 claims in one instance a porosity of 30% or more and in other instances both the use of fugitives as well as the absence of fugitives. No experimental data is given.
All described state of the art spray powders either need the addition of a pore former, and/or an additional post heat treatment to produce coatings with porosities above 30 vol%. The disadvantages of this method for producing high porosity coatings are:

- Low deposition efficiency of the used spray powder/pore former mixture.
- Need of additional raw material to produce coatings with defined thickness.
- Need of post heat treatment to create a ready to use coating with high porosity.
- Increased time and costs to produce high porosity coatings above 30 vol% porosity.

Another state of the art process is described in "Microstructure and Properties of porous Abradable Alumina Coatings flame-sprayed with semi-molten particles" in the Journal of Thermal Spray Technology January 2016. Here, the porosity is produced with fused and crushed and further plasma spherodized particles. Because of the production process, the particles are dense inside. So the process and not the particles are the main reason for the produced porosity. During the deposition by flame spraying the solid core creates a skeleton with pores between the particles. The melt from the partially molten shell fills up the skeleton more or less. The more material is molten and filled up, the lower the porosity is. The advantage of this process is that it allows the use of easily available dense particles. The disadvantage is that it works just for very low spray distances (below 60 mm) and just for small particles with a small range of the particle size distribution. In the article, particles with a diameter of between 40 and 50 $\mu$m were used. Small variations lead to unmolten particles and furthermore to bad bonding and very low deposition efficiency. The use of such small range particles leads to very low yields and high production costs

Yet, another publication (*Curry et al.*) describes the performance characterization of high-porosity thermal barrier coatings produced by high spray rate processing. The results of the study show that low-density powders with a specific density of below 1.6 g/cc achieve a high-porosity transfer to the final coating at very high feeding rates up to 280 g/min. Although, a deposition efficiency similar to a conventional coating process for thermal barrier coatings was achieved, merely coatings with porosities below 30% could be obtained (Curry N, Leitner M, Körner K. High-Porosity Thermal Barrier Coatings from High-Power Plasma Spray Equipment-Processing, Performance and Economics. Coatings. 2020; 10(10):957).

WO2022/0214553A1 discloses a suspension comprising solid ceramic particles and a solvent, wherein the fine fraction ratio of said suspension is 0.5 or lower. The density of the ceramic particles is between 3.0 and 7.0 g/cm$^3$ and the particles are characterized by having a volume based $d_{50}$ value ranging from 2 $\mu$m to 10 $\mu$m.

WO20222/14556A1 discloses a suspension for suspension thermal spraying comprising solid ceramic particles having an average particle size of 2 $\mu$m or below and a liquid phase comprising an organic solvent. The organic solvent is characterized by having a flashpoint of at least 60 °C and at most 400 °C. The suspension has a viscosity of below 20 mPa*s, wherein the concentration of said solid ceramic particles in said suspension ranges from 5 wt% to 95 wt%.

## Short description of the invention

It is the object of the present invention to overcome the drawbacks of the state of the art spray powders and methods to produce high porosity coatings with porosity levels above 30 vol%.

The object is solved by a powder comprising solid ceramic particles, characterized that said particles have an inner porosity of at least 30 %, preferably of at least 45 % and preferably at most 65%, wherein said powder has a particle size with a $d_{10}$ of at least 100 $\mu$m.

The present invention is particularly useful for thermal spraying, preferably for atmospheric plasma spraying.

A coated substrate can be obtained by coating a substrate with the powder according to the present invention. The obtained coating has a porosity of at least 30 vol%.

## Short description of the figures

Fig. 1a shows an illustrative scheme of a standard size particle (50 $\mu$m diameter).

Fig. 1b shows a cross section SEM image of a coating made from standard size particles.

Fig. 1c shows a cross section SEM image of a coating made from standard size particles with a totally melted particle and pores (white arrow) around the particle.

Fig. 1d shows an illustrative scheme of the inventive coarse powder size particle (130 $\mu$m diameter).

Fig. 1e shows a cross section SEM image of a high porosity coating made from the inventive coarse powder size particles.

Fig. 1f shows a cross section SEM image of a high porosity coating made from the inventive spray powder with partially melted particle (also referred to as "semi-molten splat") with an outer dense, melted shell with porous core. The image shows pores outside (white arrows) and inside the semi-molten splat.

Fig. 1g shows a cross section SEM image of a high porosity coating made from the inventive spray powder with focus on the distributed pores (white arrows) inside the semi-molten splat.

Fig. 2 shows a cross section SEM image of a coating made from a state of the art powder with a sieving cut at 38 $\mu$m. PSD of $d_{10}$ - 43 $\mu$m; $d_{50}$ - 90 $\mu$m; $d_{90}$ - 190 $\mu$m. The average porosity was 12 vol% (magnification: 100x, accelerating voltage: 15.0 kV, WD: 12.2 mm).

Fig. 3 shows a cross section SEM image of a coating made from a state of the art powder with a sieving cut at 63 $\mu$m. PSD of $d_{10}$ - 43 $\mu$m; $d_{50}$ - 90 $\mu$m; $d_{90}$ - 190 $\mu$m. The average porosity was 19 vol% (magnification: 100x, accelerating voltage: 15.0 kV, WD: 13.2 mm).

Fig. 4 shows a cross section SEM image of a coating made from the inventive spray powder with a sieving cut at 100 $\mu$m. PSD of $d_{10}$ - 107 $\mu$m; $d_{50}$ - 162 $\mu$m; $d_{90}$ - 251 $\mu$m. The average porosity was 35 vol% (magnification: 100x, accelerating voltage: 15.0 kV, WD: 11.4 mm).

Fig. 5 illustrates schematically the production process for manufacturing a powder according to the present invention.

Fig. 6 shows cross section SEM images of a coating made from the inventive spray powder with partially melted particles with an outer dense, melted shell (magnification: 500x, accelerating voltage: 15.0 kV, WD: 11.3 mm).

Fig. 7 shows an overview of the obtained porosity values of all examples disclosed below regarding the powder PSD $d_{50}$, the spay distance SD in mm, and the used sieves. Numbers in square brackets represent the sieve size, numbers in round brackets represent different test series. The examples according to the invention are marked with a square.

## Detailed description of the invention

The present invention provides a powder for Atmospheric Plasma Spraying (APS). This powder comprises solid ceramic particles having an inner porosity of at least 30 vol% and having a particles size with a $d_{10}$ above 100 $\mu$m.

The present invention makes it possible to transform the inner porosity of the particles into the coating made by thermal spray methods state of the art. The much coarser particle size and the very high inner porosity of the powder of the invention as compared to powders of the prior art are the key factors to produce this high porosity coatings. The time period during which the large particles are in the plasma flame is just long enough to melt the shell of the particle, but the inner porosity still remains. This remaining inner porosity is mainly responsible for the coating porosity and therefor it should be above 30 vol% to obtain a coating with a porosity of 30 vol% or higher.

The particles of the present invention are agglomerates of fine so-called primary particles.

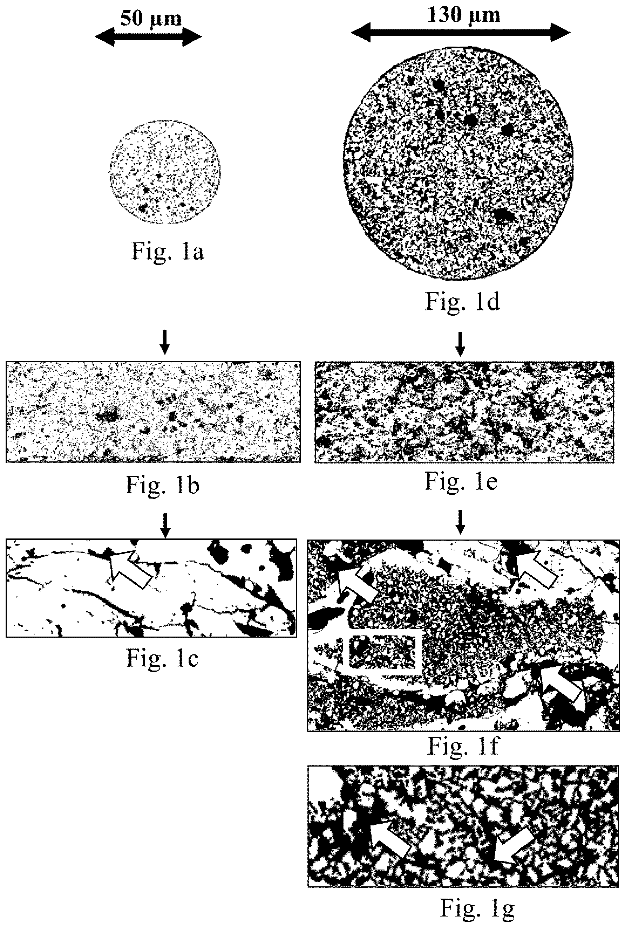

The upper two photomicrographs in Figure 1, respectively, show the particles (standard and according to the invention) being agglomerates of the fine primary particles.

In the following, if the term "particle" is used without further characterization, it refers to the agglomerates of the primary particles.

The term "particle size" as used herein refers to the $d_{10}$ value as determined from the particle size distribution. The $d_{50}$ value is known as median diameter or medium value of the particle size distribution, being determined from a volume based representation or from a number based representation . In the present application, all $d_x$ values refer to the volume based representation, i.e. the particle diameter at "x" vol% in the cumulative distribution (e.g. a $d_{10}$ of at least 100 $\mu$m means that 10 vol% of the particles have a smaller diameter than 100 $\mu$m).

In the present invention, the particle size distribution (PSD) was determined using laser diffraction particle analysis, preferably using a "CILAS" particle analyser. The particle size of the samples described in this patent were measured with a CILAS 1190 particle analyser in the wet mode, the solvent was deionized water. The measurement was done without ultra-sonic to avoid destruction of the particles during measurement. The PSD measurement range of the CILAS 1190 is 0.04 $\mu$m to 2500 $\mu$m and the analysis mode was Fraunhofer.

In such a particle analyser, the beam of the laser is scattered by the particles of the sample, and the angle of light scattering is inversely proportional to particle size. The particle size distribution is typically determined in intervals ("boxes").

According to the present invention, it is in particular favourable to minimize the volume fraction of particles having a particle size of 100 $\mu$m or lower in order to obtain high porous coatings.

Other instruments showing sensitivity and measurement ranges comparable to the CILAS 1190 may be employed to determine the particle size distribution according to the present invention. The skilled person is aware of suitable instruments on the market.

In the present invention, the porosity of the coatings was measured using an image analysis method. In this procedure, 20 images at a magnification 500 (using SEM) were taken along the cross section of the coating to fully represent the microstructure.

The images are then processed using a free available image analysis software (ImageJ 1.52a, National Institutes of Health, USA). The images are converted into binary format and an autothresholding technique (used modus: intermodes) is applied to avoid errors caused by operator. The software is able to detect the amount of pores and calculate the area of the pores, compared this area with the total area of the SEM and output the value as volume percentage (vol %). The values described in this document are the average values of the measured SEM images.

The inner porosity of the particles according to the present invention was measured with the same method.

The inner porosity or the particles of the powder of the present invention may range from 30 vol% to 65 vol%, preferably 45 vol% to 60 vol%, most preferably 45 vol% to 55 vol%.

The deposition efficiency (DE) value was measured according to DIN EN ISO 17836 2018-03, but with a ring sample of a diameter of 300 mm and a height of 100 mm. Thereby the deposition efficiency is the ratio in per cent calculated from the weight of the applied coating divided by the weight of feedstock powder used while applying the coating.

As used herein, the term "ceramic" refers to an inorganic, non-metallic solid material comprising metals or nonmetals in the form of oxides, nitrides, or carbides. Ceramic materials are brittle, hard, strong in compression, and weak in shearing and tension. They withstand chemical erosion that occurs in other materials subjected to acidic or caustic environments. Ceramics generally can withstand high temperatures, ranging from 1000 °C to 1600 °C.

In another embodiment, said solid ceramic particles comprise or consist of at least one oxide of a transition metal, a rare earth metal or a metal of group 13 or 14 of the periodic table or mixtures thereof.

The term "transition metal" as used herein refers to a transition metal element or a mixture thereof, i.e. more than one transition metal element. According to IUPAC, a transition metal is an element whose atom has an incomplete d sub-shell, or which can give rise to cations with an incomplete d sub-shell. However, for the purpose of the present specification and claims, the term "transition metal" shall only comprise the elements of groups 4-11 on the periodic table and, in addition, Zn.

The term "rare earth metal" as used herein refers to the group of 17 chemically similar metallic elements including the lanthanides, yttrium and scandium. The lanthanides are defined as the series of elements with atomic numbers 57 to 71, all of which, except promethium, occur in nature (Extractive Metallurgy of Rare Earths, C. K. Gupta, N. Krishnamurthy, CRC).

If said solid ceramic particles comprise or consist of a mixture of an oxide of a transition metal and of a rare earth metal, said oxide is preferably ytterbium zirconate ($Yb_2Zr_2O_7$, "YbZr") or gadolinium zirconate ($Gd_2Zr_2O_7$, "GdZr") or yttria stabilized zirconia (YSZ).

Said solid ceramic particles may also comprise or consist of an oxide of a rare earth metal, such as yttrium oxide (yttria, $Y_2O_3$).

If said solid ceramic particles comprise or consist of an oxide of a metal of group 13 of the periodic table, said oxide is preferably aluminium oxide (alumina, $Al_2O_3$).

If said solid ceramic particles comprise or consist of an oxide of a metal of group 14 of the periodic table, said oxide is preferably a silicate mineral comprising silicon dioxide (silica, $SiO_2$), for example rare earth silicates.

Preferably, rare earth silicates can be yttrium monosilicate (YMS), yttrium disilicate (YDS), ytterbium monosilicate (YbMS), ytterbium disilicate (YbDS), yttrium - ytterbium monosilicate (YYbMS) yttrium - ytterbium disilicate (YYbDS) or mixtures and/or composites thereof.

The term "mixture", as used herein, refers to a material made up of at least two ingredients which are not chemically bonded to each other, so that each ingredient substance retains its own chemical properties and makeup. A mixture is a physical combination of ingredients in which the identities are mixed in the form of solutions, suspensions and colloids.

"Composite", as used herein, means a combination of at least two ingredients which are chemically bonded to each other.

Preferably, the powder of the present invention essentially consists of said ceramic particles. This means that, especially, the powder is essentially free from pore formers or the like.

According to the present invention, the inner porosity of the particles is important. As set out above, the inner porosity of the particles needs to be at least 30% or higher.

During the plasma spraying process the shell of the particles melts, creating a dense area at the edge of the particles stored in the coating. For example, Fig. 1f shows partially melted particles of the inventive spray powder (right) with an outer dense, melted shell with porous core and an area with no particle around the melted particle.

However, it surprisingly turned out that the interaction between the large gaps between the large particles because of their high particle size, together with the inner porosity of the particles results to obtain a coating with a porosity of 30 vol% or higher.

It is shown that a coating made from standard size particles (see Figs. 1a and b)) is much more dense than the coating from a particle of the inventive spray powder (see Figs. 1d and e).

Furthermore, cross section SEM images from a standard size particle show a totally melted particle (Fig. 1c). In contrast, SEM images of the coating made from inventive spray powder (Fig. 1f) show partially melted particles with an outer dense, melted shell with porous core (= fine porosity) and an area with no particle around the melted particle (= coarse porosity).

Further, Fig. 1f and Fig. 1g exhibit that the coating made from the inventive powder is characterized by the uniform distribution between semi-molten splats and pores inside semi-molten splats (white arrow Fig. 1g). The term "splats", as used herein, refers to re-solidified, melted or partially melted ceramic particles. Semi-molten splats form a stable skeleton by the formation of sinter bridges between the primary particles.

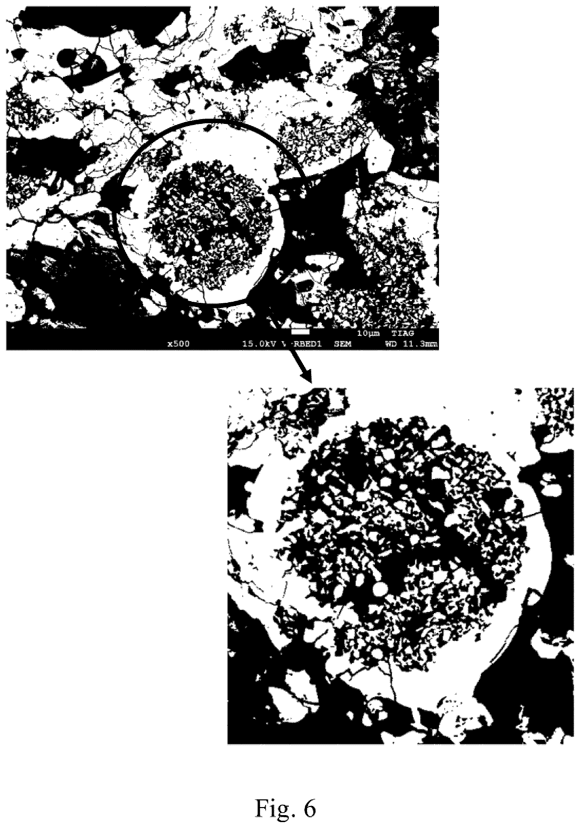

Fig. 6 shows the coarse pores between the large particles together with the fine pores in the particles. In contrast, other publications describe the presence of larger amounts of distributed globular pores within coatings lacking larger gaps between particles with the fine inner porosity (Curry N, Leitner M, Körner K. High-Porosity Thermal Barrier Coatings from High-Power Plasma Spray Equipment-Processing, Performance and Economics. Coatings. 2020; 10(10):957).

A process to produce a powder according to the present invention comprises the steps of

a) providing a powder comprising primary solid ceramic particles, wherein said particles have a particle size in a range of 0.5 and 10 $\mu$m, more preferably between 1 and 5 $\mu$m,
b) spray drying said powder by adding at least one organic binder to said powder
c) sintering said spray-dried powder at a temperature of 1300°C-1600°C for 20 to 30 hours,
d) wherein said sintered powder has a particle size distribution with a $d_{50}$ of at least 160 $\mu$m, and
e) sieving said powder with at least one sieving step, wherein a 100 $\mu$m sieve is used.

The size and inner porosity of the spay powder is mostly influenced by the spray drying process provided in the above disclosed process.

To obtain the desired inner porosity, it is important to use a powder with a primary particle size ($d_{50}$) preferable between 0.5 and 10 $\mu$m, more preferable between 1 and 5 $\mu$m, especially preferred 1.5 to 2.5 $\mu$m.

In case the particle size is too fine, the inner porosity decreases because of sintering effects that occur with fine high surface particles.

If the primary particles are too coarse, the contact area between the particles is reduced, leading to insufficient adhesion of the particles after spray drying. This can result in the disintegration of the spray-dried particles and in an insufficient high proportion of fine particles which are lost after sieving.

Also, if the primary particle size is too coarse, the particles in the powder contain just a few coarse particles with less porosity in between. Furthermore, the coarse and dense primary particles lead to harder coatings. However, a low hardness is important for the application as abradable coating. If the coating is too hard, the tip of the blades could be damaged when cutting into the abradable coating.

Spray drying (step (b)) is important to form the agglomerates by sticking together the fine primary particles.

During spray drying, an organic binder may be used. Liquid bridges are formed when particles come into contact and consolidate during drying leading to solid bridges after water evaporation. However, when low-or non-water-soluble particles have to be agglomerated, a binder may be used to form the solid bridges between said particles of the powder. Before adding the binder, the powder can be mixed with a solvent, preferably with deionized water. The binder is added as an aqueous solution to the suspension. The types of binder have a major effect on such agglomerate properties as friability, density, porosity, bulk flow, and size distribution.

The binder may be selected from commonly known substances such as the group consisting of polyvinyl alcohol, polyethylene glycol, polyacrylate, methyl hydroxyethyl cellulose, methyl hydroxypropyl cellulose, hydroxyethyl cellulose and any mixtures thereof.

The binder may be burned off during sintering.

The sintered powder is essentially free from binders or the like.

Due to the interactions between the powder and the heated air during the spray drying process, the particle size can be influenced. Process parameters such as the temperature difference at the in- and outlet of the dryer, drying air amount, the humidity of the drying air, solid content of the suspension, nozzle diameter and air-suspension ratio in case of a two fluid bottom nozzle are also important to obtain a preferable particle size.

The inner porosity can be influenced by the type of the binder, the solid content of the suspension, the viscosity of the suspension and the sintering temperature.

Two fluid bottom nozzles may use a gas (air or nitrogen) to atomize the suspension. They consist of two concentric tubes, whereas the suspension is supplied through the inner tube and the atomizing gas through the outer tube. The great advantage of bi-material nozzles is associated to the operation at low pressures (about 1.5 - 10 bar) and, depending on the nozzle design, a narrow droplet size distribution. The average droplet size may depend primarily on the ratio of the flow velocities of the atomizing gas and the suspension. With increasing pressure and thus increasing flow of atomizing gas, the droplet size becomes smaller. The same applies as the flow rate of the spray liquid decreases. In addition, the viscosity and surface tension of the suspension may play an important role with regard to the generated droplet size.

The sintering temperature may depend on the used material and may have to be adjusted. The lower the melting temperature of the material, the lower the sintering temperature has to be chosen. If the sintering temperature is selected too high, the pores of the particles partially close during sintering which would result in a reduced inner porosity. Adjusting of these parameters is within the skilled artisan's knowledge.

The spray-dried powder can be sintered at a temperature between 1200 - 1600°C for 20 to 30 hours.

As an example, zirconia has to be sintered at higher temperatures in the range of 1400 to 1500°C, wherein silicates have to be sintered at lower temperatures between 1200 and 1300°C.

Furthermore, the sintering parameters need to be optimized to create hard connections between the primary particles to avoid destruction during plasma spraying but on the other hand to avoid too hard and dense particles. If the sintering temperature is too high, the porosity will decrease because of sintering effects and therefore the spray particles do not have a sufficient inner porosity for producing high porosity abradable coatings.

As an example for ceramic particles selected from the group consisting of YSZ, YbZr, GdZr sintering temperatures of 1400°C to 1500°C have been found useful.

Higher dumping heights of material require longer sintering time and vice versa.

According to a specific embodiment, the sintering temperature can be achieved by a continuous heating-rate of 50 - 200°C per hour. The heating rate is an important parameter during sintering. If the heating-rate would be too high, the organic part of the particles would outgas too fast, resulting in the destruction of the particles. This effect would reduce the yield of particles with a particle size above 100 $\mu$m.

There may be no holding time during the heating until the preferred temperature is reached. The sintered powder may have a particle size distribution with a $d_{10}$ of at 100 $\mu$m to 110 $\mu$m.

The sintered powder may have a particle size distribution with a $d_{50}$ of at least 160 $\mu$m. A particle size distribution with a $d_{50}$ of at least 160 $\mu$m is preferred to obtain a coarse thermal spray powder after sieving.

Said powder can be sieved with at least one sieving step, wherein a 100 $\mu$m sieve is used to cut off the particles in the range of below 100 $\mu$m. Sieving step e) can be performed both before and after sintering step c).

Additional sieving steps may avoid fine particles <100 $\mu$m in the powder. Particle amounts below 100 $\mu$m can lead to dense melted areas between large particles.

The PSD of the powder is preferably measured after sintering. If at this point still fine particles are present, a sieving step or, in case a sieving step was already performed before sintering, a further sieving step is necessary.

The inventive powder can be used for producing a coating with a porosity above 30 vol % by thermal spraying, preferably by atmospheric plasma spraying, without the need of post heat treatment or the addition of a pore former to produce high-porous coatings. The skilled person is aware of suitable thermal spray parameters for obtaining a coating.

According to the present invention, the powder can be used for producing a coating on any suitable substrate, such as a metal, a ceramic, a polymer, a ceramic matrix composite, a metal alloy or mixtures or composites thereof. The term "ceramic matrix composite" refers to a composite material comprising ceramic fibers embedded in a ceramic matrix. For example, the substrate may consist of steel, preferably stainless steel, aluminium, or a superalloy.

In another embodiment, a coated substrate can be obtained by coating said substrate with the powder as described herein.

In a particular embodiment, the coating on the substrate has a porosity from 30 vol % to 60 vol%.

Preferably, the coating on the substrate is characterized by a uniform distribution of pores. The uniform distribution of pores refers to the distribution between splats (as defined above) and pores both inside and outside the splats (see Figs. 1f and 1g).

The present invention will now be explained in more detail in the following examples and comparative examples, without being limited thereto.

**Examples**

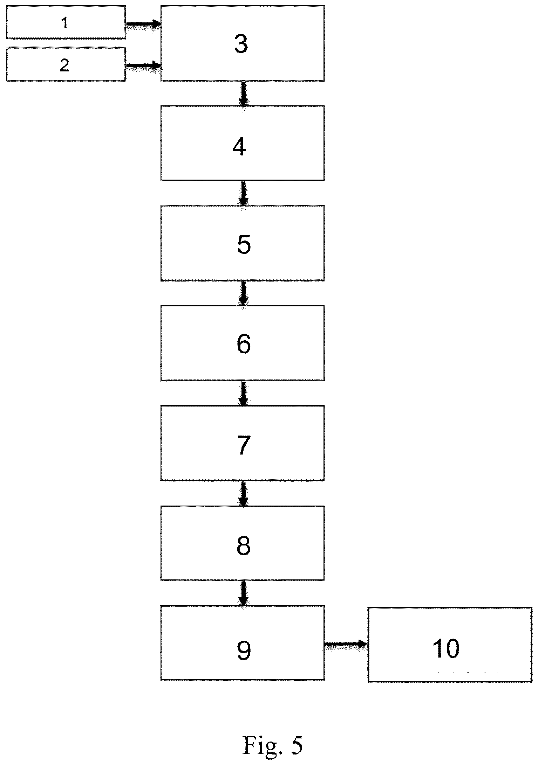

All examples describe the different tested powders, the coating tests made with different parameters and the porosity results. The process for producing the powder of the present invention is illustrated schematically in Fig. 5.

The raw materials 1,2 of the powder were mixed, melted 3, crushed 4, annealed 5, and milled 6. The powder was then added to the deionized water under stirring, and binder compositions was added to achieve a viscosity of the mixture in a target range between 200 and 300 mPa*s at a shear rate of 100 s$^{-1}$. Spray drying 7 was performed with a spray dryer (GEA Niro 6.3) by using a two fluid bottom nozzle at an inlet temperature of 240 - 300°C, an outlet temperature of 135°C and an atomized air flow of 8 - 16 m$^3$/h. After spray drying, the powder was sintered 8 at 1450°C (Comparative Examples 1 to 28, Working Examples 29 to 40 and Comparative Examples 41 to 43) and at 1500°C (Comparative Examples 44 to 51) for 30 hours using a Nabertherm HT160/17 LBS oven. In some examples, the sintered powder was sieved 9 to obtain the final product 10.

The powders then were subjected to a plasma spraying process under varying conditions, especially with regard to spray distance and injector diameter. Injector diameter and spray distance was adjusted accordingly depending on the powder, which is common knowledge of the skilled artisan.

**Comparative Examples 1 to 16 = Ytterbiumzirconate powder without sieving.**

Approximately 5 kg of an Ytterbium zirconate spray powder, produced as described in Fig. 5 and above was used for making an abradable coating by plasma spraying. The measured inner porosity of the powder was approx. 45%. The particle size was adjusted by spray drying as described above.

The plasma spraying was done with an HE 100 spray gun (Progressive Surface, USA). All important parameters and values are summarized in Table 1. The constant plasma spray parameters were as follows: volumetric flow rate of the plasma gas was adjusted to 60 lsm Argon, 40 lsm Nitrogen, and 50 lsm Hydrogen. The carrier flow rate was set to 21 lsm Argon. Powder flow rate was 150 g/min. The power was 95 kW.

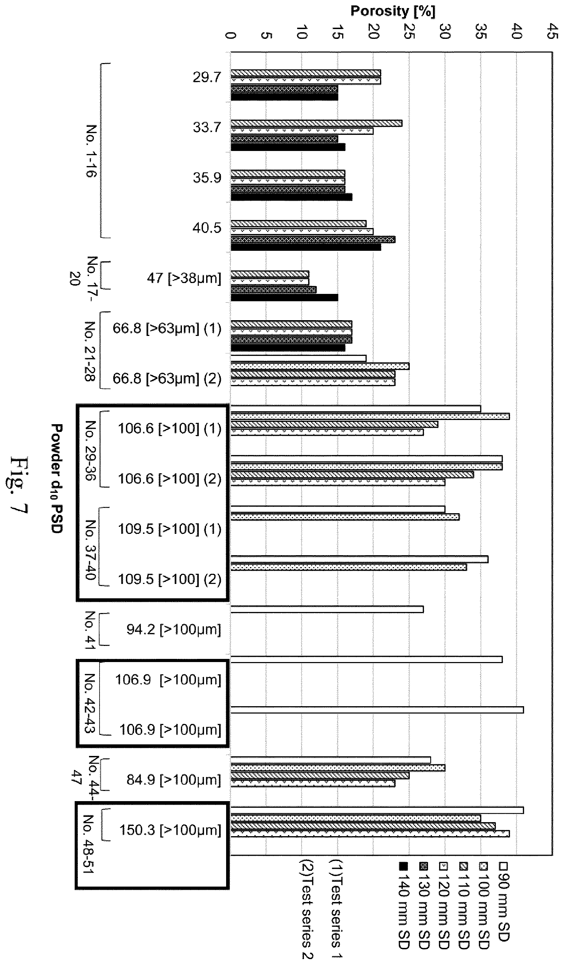

The porosity values in the achieved coating were between 15 vol% and 24 vol% depending on the spray parameters. As it can be seen in Fig. 7 there is no clear tendency of the porosity in dependency of particle size. It could also be observed that spray distance above 110 mm result in lower porosities.

Table 1

| No. | Powder PSD $d_{10}$ [um] | Powder PSD $d_{50}$ ($\mu$m) | Sieved [um sieve used] | Injector [inch] | Nozzle [inch] | SD [mm] | Current A | Voltage V | Porosity Coating [vol%] |
|---|---|---|---|---|---|---|---|---|---|
| 1 | 29.7 | 85.5 | no | 0.073 | 0.55 | 110 | 453 | 210 | 21 |
| 2 | 29.7 | 85.5 | no | 0.073 | 0.55 | 120 | 453 | 210 | 21 |
| 3 | 29.7 | 85.5 | no | 0.073 | 0.55 | 130 | 453 | 210 | 15 |
| 4 | 29.7 | 85.5 | no | 0.073 | 0.55 | 140 | 453 | 210 | 15 |
| 5 | 33.7 | 100.1 | no | 0.073 | 0.55 | 110 | 450 | 211 | 24 |
| 6 | 33.7 | 100.1 | no | 0.073 | 0.55 | 120 | 450 | 211 | 20 |
| 7 | 33.7 | 100.1 | no | 0.073 | 0.55 | 130 | 450 | 211 | 15 |
| 8 | 33.7 | 100.1 | no | 0.073 | 0.55 | 140 | 450 | 211 | 16 |
| 9 | 35.9 | 94.8 | no | 0.073 | 0.55 | 110 | 453 | 210 | 16 |
| 10 | 35.9 | 94.8 | no | 0.073 | 0.55 | 120 | 453 | 210 | 16 |
| 11 | 35.9 | 94.8 | no | 0.073 | 0.55 | 130 | 453 | 210 | 16 |
| 12 | 35.9 | 94.8 | no | 0.073 | 0.55 | 140 | 453 | 210 | 17 |
| 13 | 40.5 | 108.5 | no | 0.073 | 0.55 | 110 | 454 | 209 | 19 |
| 14 | 40.5 | 108.5 | no | 0.073 | 0.55 | 120 | 454 | 209 | 20 |
| 15 | 40.5 | 108.5 | no | 0.073 | 0.55 | 130 | 454 | 209 | 23 |
| 16 | 40.5 | 108.5 | no | 0.073 | 0.55 | 140 | 454 | 209 | 21 |

**Comparative Examples 17 to 20 = Ytterbiumzirconate powder with 38 $\mu$m sieving. Comparative Examples 21 to 28 = Ytterbiumzirconate with 63 $\mu$m sieving.**

Approximately 26 kg of an Ytterbium zirconate spray powder, produced as described in Fig. 5 and above, was used for making an abradable coating by plasma spraying. The measured inner porosity of the powder was appox. 45%. The powder was sieved partially with a 38 $\mu$m vibration sieve until the amount of spray powder >38 $\mu$m was approx. 12 kg (Comparative Examples 17 to 20). The rest of the powder was sieved with a 63 $\mu$m vibration sieve (Comparative Examples 21 to 28). The total amounts after sieving were:

$$11.9 \text{ kg} > 38 \text{ μm} = \text{spray powder}$$

$$1.74 \text{ kg} < 38 \text{ μm}$$

$$9.1 \text{ kg} > 63 \text{ μm} = \text{spray powder}$$

$$3.3 \text{ kg} < 63 \text{ μm}$$

The plasma spraying was done with an HE 100 spray gun (Progressive Surface, USA). All-important parameters and values are summarized in Tables 2 and 3. The constant plasma spray parameters for Comparative Examples 17 to 24 were as follows: volumetric flow rate of the plasma gas was adjusted to 60 lsm Argon, 40 lsm Nitrogen, and 50 lsm Hydrogen. For Comparative Examples 25 to 28 the volumetric flow rate of the plasma gas was 60 lsm Argon, 37 lsm Nitrogen, and 71 lsm Hydrogen.

The carrier gas for the Comparative Examples 17 to 20 was constant at 21 lsm Argon and for the comparative examples 18 to 28 at 18 lsm Argon.

For the Comparative Examples 17 to 28, the powder flow rate was set to 150 g/min and the power was 95 kW.

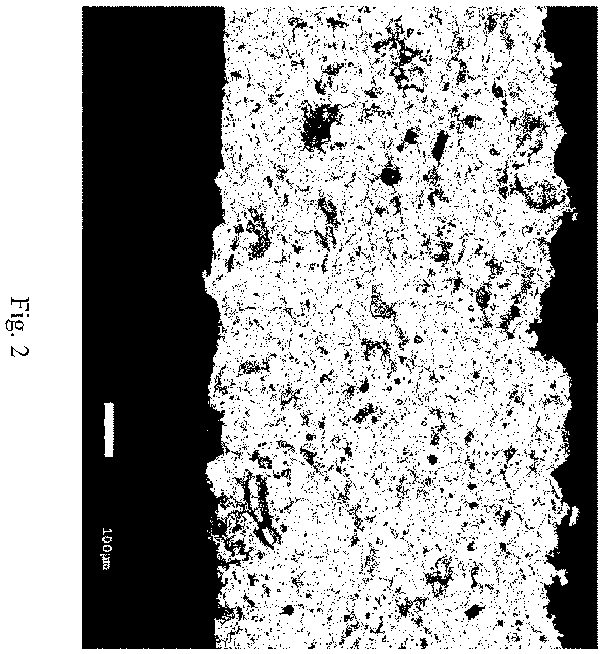

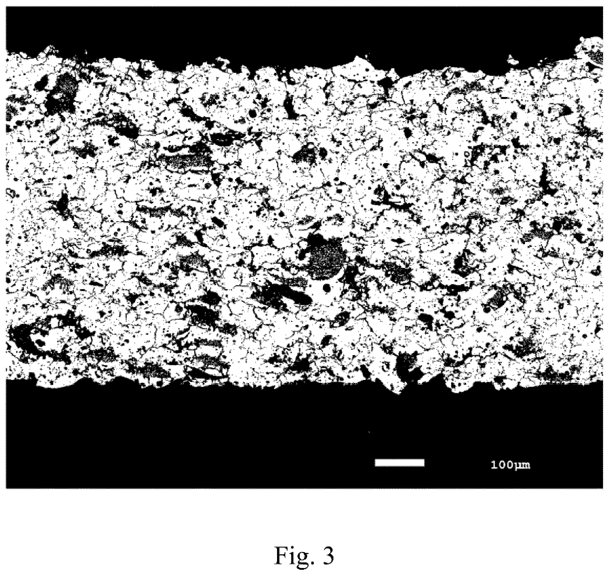

The porosity values were between 11 and 25 vol% depending on the spray parameters. For example, Fig. 2 shows a cross section SEM image of a coating made from a state of the art powder with a sieving cut at 38 μm having an average porosity of 12 vol% (Table 2, Comparative Example 19). Fig. 3 shows a SEM image of a coating made from a state of the art powder with a sieving cut at 63 μm with an average porosity of 19 vol% (Table 3, Comparative Example 25).

As it can be seen in Fig. 7 there is no clear tendency of the porosity in dependency of particle size.

Table 2

| No. | Powder PSD $d_{10}$ [um] | Powder PSD $d_{50}$ (μm) | Sieved [um sieve used] | Injector [inch] | Nozzle [inch] | SD [mm] | Current A | Voltage V | Porosity Coating [vol%] |
|---|---|---|---|---|---|---|---|---|---|
| 17 | 47 | 80.8 | 38 | 0.073 | 0.55 | 110 | 456 | 208 | 11 |
| 18 | 47 | 80.8 | 38 | 0.073 | 0.55 | 120 | 456 | 208 | 11 |
| 19 | 47 | 80.8 | 38 | 0.073 | 0.55 | 130 | 456 | 208 | 12 |
| 20 | 47 | 80.8 | 38 | 0.073 | 0.55 | 140 | 456 | 208 | 15 |

Table 3

| No. | Powder PSD $d_{10}$ [um] | Powder PSD $d_{50}$ (μm) | Sieved [um sieve used] | Injector [inch] | Nozzle [inch] | SD [mm] | Current A | Voltage V | Porosity Coating [vol%] |
|---|---|---|---|---|---|---|---|---|---|
| 21 | 66.8 | 106.8 | 63 | 0.073 | 0.55 | 110 | 453 | 210 | 17 |
| 22 | 66.8 | 106.8 | 63 | 0.073 | 0.55 | 120 | 453 | 210 | 17 |
| 23 | 66.8 | 106.8 | 63 | 0.073 | 0.55 | 130 | 453 | 210 | 17 |
| 24 | 66.8 | 106.8 | 63 | 0.073 | 0.55 | 140 | 453 | 210 | 16 |
| 25 | 66.8 | 106.8 | 63 | 0.073 | 0.55 | 90 | 430 | 221 | 19 |
| 26 | 66.8 | 106.8 | 63 | 0.073 | 0.55 | 100 | 430 | 221 | 25 |
| 27 | 66.8 | 106.8 | 63 | 0.073 | 0.55 | 110 | 430 | 221 | 23 |
| 28 | 66.8 | 106.8 | 63 | 0.073 | 0.55 | 120 | 430 | 221 | 23 |

**Working Examples 29 to 36**

Approx 5 kg of the already sieved spray powder (>38 $\mu$m) of Comparative Examples 17 to 20 was additionally sieved with a 100 $\mu$m vibration sieve. The amount of >100 $\mu$m spray powder was 2.4 kg. The measured inner porosity of the powder was approx. 52% with a particle size of at least 100 $\mu$m. The plasma spraying was done with an HE 100 spray gun (Progressive Surface, USA). All-important parameters and values are summarized in Table 4. The constant plasma spray parameters were as follows: volumetric flow rate of the plasma gas was adjusted to 60 lsm Argon, 37 lsm Nitrogen, and 71 lsm Hydrogen. The carrier flow rate was set to 18 lsm Argon. Powder flow rate was 150 g/min. The power was 95 kW.

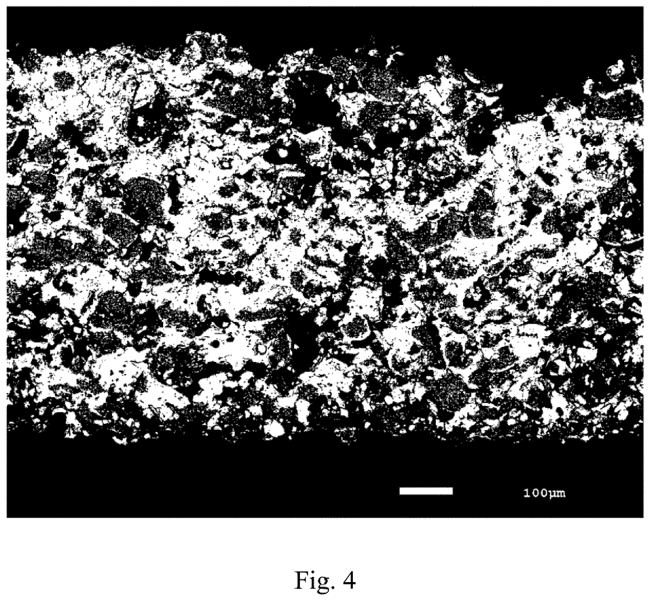

The porosity values were between 27 and 38 vol% depending on the spray parameters. For the first time it was observed that almost all tests led to a coating with porosity values above 30 vol%. Just two values were slightly below 30 vol%, apparently as a result of increasing spray distance. Fig. 4 shows a representative SEM image of a coating made from the inventive spray powder with a sieving cut at 100 $\mu$m having an average porosity of 35 vol% (Table 4, Working Example 1).

Especially the spray distance, the injector diameter and the current have an influence on the formation of the coating. It can be seen that very long spray distances and small injector diameters - for example 110 mm and higher SD and 0.073-inch injector - could lead in the worst case to porosities below 30 vol% although a powder according to the present invention is used. The values of the two examples of the inventive powder with porosities below 30 vol% are close to 30 vol% and still show higher values as it was possible to get by the powders used in the Comparative Examples.

Table 4

| No. | Powder PSD $d_{10}$ [um] | Powder PSD $d_{50}$ ($\mu$m) | Sieved [um sieve used] | Injector [inch] | Nozzle [inch] | SD [mm] | Current A | Voltage V | Porosity Coating [vol%] |
|---|---|---|---|---|---|---|---|---|---|
| 29 | 106.6 | 162.3 | 100 | 0.073 | 0.55 | 90 | 427 | 223 | 35 |
| 30 | 106.6 | 162.3 | 100 | 0.073 | 0.55 | 100 | 427 | 223 | 39 |
| 31 | 106.6 | 162.3 | 100 | 0.073 | 0.55 | 110 | 427 | 223 | 29 |
| 32 | 106.6 | 162.3 | 100 | 0.073 | 0.55 | 120 | 427 | 223 | 27 |
| 33 | 106.6 | 162.3 | 100 | 0.1 | 0.55 | 90 | 427 | 223 | 38 |
| 34 | 106.6 | 162.3 | 100 | 0. 1 | 0.55 | 100 | 427 | 223 | 38 |
| 35 | 106.6 | 162.3 | 100 | 0.1 | 0.55 | 110 | 427 | 223 | 34 |
| 36 | 106.6 | 162.3 | 100 | 0.1 | 0.55 | 120 | 427 | 223 | 30 |

**Working Examples 37 to 40**

Approx. 33.9 kg of a spray dried powder, produced as described in Fig.5 and above was sieved with a 100 $\mu$m vibration sieve after sintering,. The measured inner porosity of the powder was approx. 52%. The amount of >100 $\mu$m spray powder was 15.46 kg. The plasma spraying was done with an HE 100 spray gun (Progressive Surface, USA). All important parameters and values are summarized in Table 5. The constant plasma spray parameters were as follows: volumetric flow rate of the plasma gas was adjusted to 60 lsm Argon, 37 lsm Nitrogen, and 71 lsm Hydrogen. The carrier flow rate was set to 18 lsm Argon. Powder flow rate was 150 g/min. The power was 95 kW.

The porosity values were between 30 and 36 vol% depending on the spray parameters. The evaluation of the DE measurements of the spray process showed a 42% DE for sample no. 39 and 34% DE for sample no. 40.

Table 5

| No. | Powder PSD $d_{10}$ [um] | Powder PSD $d_{50}$ [um] | Sieved [um sieve used] | Injector [inch] | Nozzle [inch] | SD [mm] | Current A | Voltage V | Porosity [vol%] |
|---|---|---|---|---|---|---|---|---|---|
| 37 | 109.5 | 170.1 | 100 | 0.073 | 0.55 | 90 | 434 | 219 | 30 |
| 38 | 109.5 | 170.1 | 100 | 0.073 | 0.55 | 100 | 433 | 219 | 32 |

(continued)

| No. | Powder PSD d$_{10}$ [um] | Powder PSD d$_{50}$ [um] | Sieved [um sieve used] | Injector [inch] | Nozzle [inch] | SD [mm] | Current A | Voltage V | Porosity [vol%] |
|---|---|---|---|---|---|---|---|---|---|
| 39 | 109.5 | 170.1 | 100 | 0.1 | 0.55 | 90 | 435 | 219 | 36 |
| 40 | 109.5 | 170.1 | 100 | 0.1 | 0.55 | 100 | 435 | 218 | 33 |

**Comparative example Example 41**

Approximately 5 kg of an Gadoliniumzirconate spray powder, produced as described in Fig. 5 was used for making an abradable coating by plasma spraying. The measured inner porosity of the powder was approx. 36%. The particle size was adjusted by spray drying as described above. For the upper PSD range the material was sieved with a 425 $\mu$m sieve before sintering and the coarser material was discarded. The remaining Gadoliniumzirconate powder was then sieved 100 $\mu$m before sintering. The powder contained 10.5 wt% fine particles <100 $\mu$m after sintering.

The plasma spraying was done with an HE 100 spray gun (Progressive Surface, USA). All important parameters and values are summarized in Table 6. The plasma spray parameters were as follows: volumetric flow rate of the plasma gas was adjusted to 85 slm Argon, 47 slm Nitrogen, and 71 slm Hydrogen. The carrier flow rate was set to 18 slm Argon. Powder flow rate was 150 g/min. The power was 95 kW.

The porosity value in the achieved coating was 27 vol%. It was observed that already a small amount of fines below 100 $\mu$m decreases the porosity to below 30 vol%.

Table 6

| No. | Powder PSD d$_{10}$ [um] | Powder PSD d$_{50}$ [um] | Sieved [um sieve used] | Injector [inch] | Nozzle [inch] | SD [mm] | Current A | Voltage V | Porosity [vol%] |
|---|---|---|---|---|---|---|---|---|---|
| 41 | 94.2 | 157.9 | 100 | 0.1 | 0.55 | 90 | 398 | 238 | 27 |

**Working examples 42 and 43**

Approximately 4 kg of the sintered Gadoliniumzirconate powder from example 41 was further 100 $\mu$m sieved. The fine material was discarded. The coarser material was totally free of fine particles <100 $\mu$m and was used for making an abradable coating by plasma spraying. The measured inner porosity of the powder was approx. 36%. The particle size was adjusted as described above.

The plasma spraying was done with an HE 100 spray gun (Progressive Surface, USA). All important parameters and values are summarized in Table 7. The plasma spray parameters were the same as in example 41.

The porosity values in the achieved coatings were 38 and 41 vol%. It has to be noted that the only difference between example 41 and 42+43 was the additional sieving step to avoid fine particles <100 $\mu$m in the spray powder.

This example also shows that it is possible to achieve a porosity of the coating which is higher than the inner porosity of the particles of the powder.

Table 7

| No. | Powder PSD d$_{10}$ [um] | Powder PSD d$_{50}$ [um] | Sieved [um sieve used] | Injector [inch] | Nozzle [inch] | SD [mm] | Current A | Voltage V | Porosity [vol%] |
|---|---|---|---|---|---|---|---|---|---|
| 42 | 106.9 | 168.2 | 100 | 0.1 | 0.55 | 90 | 400 | 239 | 38 |
| 43 | 106.9 | 168.2 | 100 | 0.1 | 0.55 | 90 | 398 | 238 | 41 |

**Comparative examples 44 to 47**

Approximately 8.7 kg of an 48 YSZ (= 48 wt% Y$_2$O$_3$ and 52wt% ZrO2) spray powder, produced as described in Fig. 5 was used for making an abradable coating by plasma spraying. The measured inner porosity of the powder was approx. 45%. The particle size was adjusted by spray drying as described above. For the upper PSD range the material was sieved with a 425 $\mu$m sieve before sintering and the coarser material was discarded. The remaining 48 YSZ powder was sieved 100 $\mu$m before sintering. After sieving, the powder contained 13 wt% fine particles <100 $\mu$m after sintering.

The plasma spraying was done with an HE 100 spray gun (Progressive Surface, USA). All important parameters and values are summarized in Table 8. The plasma spray parameters were as follows: volumetric flow rate of the plasma gas was adjusted to 60 slm Argon, 37 slm Nitrogen, and 71 slm Hydrogen. The carrier flow rate was set to 16 slm Argon. Powder flow rate was 150 g/min. The power was 105 kW.

The porosity values in the achieved coating were between 23 and 30 vol%. It was observed that a small amount of fines below 100 $\mu$m decreases the porosity to $\leq$ 30 vol%.

Table 8

| No. | Powder PSD $d_{10}$ [um] | Powder PSD $d_{50}$ [um] | Sieved [um sieve used] | Injector [inch] | Nozzle [inch] | SD [mm] | Current | Voltage | Porosity [vol%] |
|-----|-----|-----|-----|-----|-----|-----|-----|-----|-----|
| | | | | | | | A | V | |
| 44 | 84.9 | 216.5 | 100 | 0.1 | 0.55 | 90 | 475 | 221 | 28 |
| 45 | 84.9 | 216.5 | 100 | 0.1 | 0.55 | 100 | 475 | 221 | 30 |
| 46 | 84.9 | 216.5 | 100 | 0.1 | 0.55 | 110 | 475 | 221 | 25 |
| 47 | 84.9 | 216.5 | 100 | 0.1 | 0.55 | 120 | 475 | 221 | 23 |

**Working Examples 48 to 51**

Approx. 8.5 kg of a spray dried and sintered powder produced as described above and in Fig. 5 was further sieved with a 100 $\mu$m vibration sieve for the fine cut and with a 425 $\mu$m sieve for the coarse cut after sintering. The amount of >100 <425 $\mu$m spray powder was 5.46 kg. The fine and the coarse material were discarded. The material 100 to 425 $\mu$m was used for making an abradable coating by plasma spraying and was totally free of fine particles <100 $\mu$m. The measured inner porosity of the powder was approx. 48%. The particle size was adjusted as described above.

The plasma spraying was done with an HE 100 spray gun (Progressive Surface, USA). All important parameters and values are summarized in Table 9.

The porosity values in the achieved coatings were 35 and 41 vol%. It has to be noted that the only difference between examples 44 to 47 and 48 to 51 was the additional sieving step to avoid fine particles <100 $\mu$m in the spray powder.

Table 9

| No. | Powder PSD $d_{10}$ [um] | Powder PSD $d_{50}$ [um] | Sieved [um sieve used] | Injector [inch] | Nozzle [inch] | SD [mm] | Current | Voltage | Porosity [vol%] |
|-----|-----|-----|-----|-----|-----|-----|-----|-----|-----|
| | | | | | | | A | V | |
| 48 | 150.3 | 249.5 | 100 | 0.1 | 0.55 | 90 | 475 | 221 | 41 |
| 49 | 150.3 | 249.5 | 100 | 0.1 | 0.55 | 100 | 475 | 221 | 35 |
| 50 | 150.3 | 249.5 | 100 | 0.1 | 0.55 | 110 | 475 | 221 | 37 |
| 51 | 150.3 | 249.5 | 100 | 0.1 | 0.55 | 120 | 475 | 221 | 39 |

**Claims**

1. A powder comprising solid ceramic particles, characterized that said particles have an inner porosity, as measured according to the specification, of at least 30 %, preferably of at least 45 % and preferably at most 65%, wherein said powder has a particle size with a $d_{10}$ of at least 100 $\mu$m, as measured according to the specification.

2. The powder according to claim 1, wherein said solid ceramic particles comprise or consist of at least one oxide of a transition metal, a rare earth metal, a metal of group 13 or 14 of the periodic table and any combination thereof.

3. The powder according to claim 2, wherein said solid ceramic solid particles are selected from the group consisting of ytterbium zirconate ($Yb_2Zr_2O_7$), gadolinium zirconate ($Gd_2Zr_2O_7$), yttrium stabilized zirconia (YSZ), yttrium oxide

($Y_2O_3$), aluminium oxide ($Al_2O_3$), a silicate mineral comprising silicon dioxide, preferably rare earth silicates like yttrium monosilicate (YMS), yttrium disilicate (YDS), ytterbium monosilicate (YbMS), ytterbium disilicate (YbDS), yttrium - ytterbium monosilicate (YYbMS), yttrium - ytterbium disilicate (YYbDS), or mixtures and/or composites thereof.

4. Use of the powder according to any one of claims 1 to 3 for thermal spraying, preferably for atmospheric plasma spraying.

5. Use according to claim 4 for producing a coating having a porosity of at least 30 % on a substrate, wherein said substrate is selected from the group consisting of a metal, a ceramic, a polymer, a ceramic matrix composite, a metal alloy, and a mixture and/or composite thereof.

6. Coated substrate, obtainable by coating said substrate with a powder according to any of claims 1 to 3.

7. Coated substrate according to claim 6, wherein said coating has a porosity from 30 vol % to 60 vol%

50 µm

130 µm

Fig. 1a

Fig. 1d

Fig. 1b

Fig. 1e

Fig. 1c

Fig. 1f

Fig. 1g

Fig. 2

Fig. 3

Fig. 4

Fig. 5

Fig. 6

Fig. 7

Porosity [%]

Powder $d_{10}$ PSD

No. 1-16
- 29.7
- 33.7
- 35.9
- 40.5

No. 17-20
- 47 [>38µm]

No. 21-28
- 66.8 [>63µm] (1)
- 66.8 [>63µm] (2)

No. 29-36
- 106.6 [>100] (1)
- 106.6 [>100] (2)

No. 37-40
- 109.5 [>100] (1)
- 109.5 [>100] (2)

No. 41
- 94.2 [>100µm]

No. 42-43
- 106.9 [>100µm]
- 106.9 [>100µm]

No. 44-47
- 84.9 [>100µm]

No. 48-51
- 150.3 [>100µm]

Legend:
- □ 90 mm SD
- ▨ 100 mm SD
- ▤ 110 mm SD
- ▥ 120 mm SD
- ▦ 130 mm SD
- ■ 140 mm SD
- (1) Test series 1
- (2) Test series 2

Europäisches
Patentamt

European
Patent Office

Office européen
des brevets

# EUROPEAN SEARCH REPORT

Application Number

EP 22 21 3568

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUO FANGWEI ET AL: "Hollow ceramic microspheres prepared by combining electro-spraying with non-solvent induced phase separation method: A promising feedstock for thermal barrier coatings", MATERIALS & DESIGN, [Online] vol. 139, 10 November 2017 (2017-11-10), pages 343-350, XP085321523, ISSN: 0264-1275, DOI: 10.1016/J.MATDES.2017.11.022 Retrieved from the Internet: URL:https://www.sciencedirect.com/science/article/pii/S0264127517310535?via%3Dihub> [retrieved on 2023-05-16] * abstract * * 1. "introduction"; 2. "Experimental procedure"; 3. "Results and discussion"; 4. "Summary"; figures 6,7 * | 1-7 | INV. C04B35/626 C04B35/622 C04B35/111 C04B35/16 C04B35/486 C04B35/505 C23C4/11 C23C4/134 C01G25/00 C04B41/00 C04B41/45 C04B41/87 |
| X | US 2017/166485 A1 (HONG WOONG PYO [KR] ET AL) 15 June 2017 (2017-06-15) * paragraphs [0008], [0009], [0057], [0059], [0060], [0075], [0076], [0113]; claims 1,7; figures 1-3; example 1; tables 1-3 * | 1-7 | |
| X | WO 2018/169753 A1 (SAINT GOBAIN CERAMICS [US]; FOISE JONATHAN W [US] ET AL.) 20 September 2018 (2018-09-20) * claim 15; figures 4,6-11,12,13A; examples 1-4 * | 1-3 | |

-/--

TECHNICAL FIELDS SEARCHED (IPC)

C04B
C23C
C01G

The present search report has been drawn up for all claims

| Place of search | Date of completion of the search | Examiner |
|---|---|---|
| Munich | 16 May 2023 | Bonneau, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 22 21 3568

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROY P ET AL: "Spray drying and sintering of zirconia based hollow powders", POWDER TECHNOLOGY, ELSEVIER, BASEL (CH), vol. 157, no. 1-3, 29 September 2005 (2005-09-29), pages 20-26, XP027793449, ISSN: 0032-5910 [retrieved on 2005-09-29] * 1. "Introduction"; 2. "Experimental procedure"; 3. "Results and discussion"; figures 1,4,5; tables 2,3,5 * ----- | 1-7 | |
| A | US 2013/202912 A1 (TORIGOE TAIJI [JP] ET AL) 8 August 2013 (2013-08-08) * claims 1-5; figures 2-8; table 1 * ----- | 1-7 | |

TECHNICAL FIELDS SEARCHED (IPC)

The present search report has been drawn up for all claims

| Place of search | Date of completion of the search | Examiner |
|---|---|---|
| Munich | 16 May 2023 | Bonneau, Sébastien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                               

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 3568

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2023

| Patent document cited in search report | | Publication date | Patent family member(s) | | Publication date |
|---|---|---|---|---|---|
| US 2017166485 | A1 | 15-06-2017 | CN | 106882968 A | 23-06-2017 |
| | | | DE | 102016206971 A1 | 22-06-2017 |
| | | | KR | 20170071300 A | 23-06-2017 |
| | | | US | 2017166485 A1 | 15-06-2017 |
| WO 2018169753 | A1 | 20-09-2018 | BR | 112019019080 A2 | 22-04-2020 |
| | | | CA | 3056376 A1 | 20-09-2018 |
| | | | CN | 110636998 A | 31-12-2019 |
| | | | EP | 3596027 A1 | 22-01-2020 |
| | | | JP | 2020510601 A | 09-04-2020 |
| | | | KR | 20190109569 A | 25-09-2019 |
| | | | SG | 11201908482R A | 30-10-2019 |
| | | | US | 2018272316 A1 | 27-09-2018 |
| | | | US | 2021146337 A1 | 20-05-2021 |
| | | | WO | 2018169753 A1 | 20-09-2018 |
| | | | ZA | 201906761 B | 24-02-2021 |
| US 2013202912 | A1 | 08-08-2013 | CN | 102471863 A | 23-05-2012 |
| | | | EP | 2514850 A1 | 24-10-2012 |
| | | | JP | 5602156 B2 | 08-10-2014 |
| | | | JP | WO2011074290 A1 | 25-04-2013 |
| | | | KR | 20120025592 A | 15-03-2012 |
| | | | KR | 20140129392 A | 06-11-2014 |
| | | | US | 2013202912 A1 | 08-08-2013 |
| | | | WO | 2011074290 A1 | 23-06-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5434210 A
- US 8486520 B2
- EP 2444514 A1
- EP 2514850 B1
- WO 2022197827 A
- WO 20220214553 A1
- WO 2022214556 A1

**Non-patent literature cited in the description**

- Microstructure and Properties of porous Abradable Alumina Coatings flame-sprayed with semi-molten particles. *Journal of Thermal Spray Technology,* January 2016
- **CURRY N ; LEITNER M ; KÖRNER K.** High-Porosity Thermal Barrier Coatings from High-Power Plasma Spray Equipment-Processing, Performance and Economics. *Coatings,* 2020, vol. 10 (10), 957
- **CURRY N ; LEITNER M ; KÖRNER K.** High-Porosity Thermal Barrier Coatings from High-Power Plasma Spray Equipment-Processing. *Performance and Economics. Coatings,* 2020, vol. 10 (10), 957